# EUROPÄISCHE PATENTSCHRIFT

(11) **EP 2 848 363 B1**
(45) Veröffentlichungstag und Bekanntmachung des Hinweises auf die Patenterteilung: **06.04.2016**
(21) Anmeldenummer: 14173495.4
(22) Anmeldetag: 23.06.2014
(51) Int. Cl.: B23Q 11/08

(54) **Transparente Schutzabdeckung**
Transparent protective cover
Revêtement de protection transparent

(30) Priorität: 16.09.2013 DE 202013104207 U
(43) Veröffentlichungstag der Anmeldung: 18.03.2015
(73) Patentinhaber: Arno Arnold GmbH, 63179 Obertshausen (DE)
(72) Erfinder: Mang, Wolf Matthias, 63179 Obertshausen (DE)
(74) Vertreter: advotec.

(56) Entgegenhaltungen:
- EP-A1- 0 433 534
- DE-A1-102010 007 740
- DE-U- 6 919 007

## Beschreibung

Die Erfindung betrifft eine Schutzabdeckung, insbesondere zur Abdeckung von Maschinenelementen oder dergleichen, mit einer Mehrzahl beweglicher Stützrahmen mit zwischenliegenden Balgabschnitten gemäß dem Oberbegriff des Anspruchs 1.

Aus dem Stand der Technik sind verschiedenste Ausführungsformen von Schutzabdeckungen bekannt. Betrachtet werden hierbei diejenigen Schutzabdeckungen, welche zur Abdeckung von Maschinenelementen oder dergleichen geeignet sind. Hierbei weisen diese in aller Regel tragende Stützrahmen auf, welche sich in einer Führung an den Maschinenelementen abstützen. Die Stützrahmen überdeckend bzw. zwischen den Stützrahmen befinden sich jeweils Balgabschnitte zur Abdeckung des entsprechenden Maschinenelements. Die Längenveränderlichkeit der Schutzabdeckung ergibt sich in bekannter Weise durch das Falten der zwischen liegenden Balgabschnitten, wozu diese in bekannter Weise flexibel ausgeführt sind. Exemplarisch sei hierzu die EP 0 433 534 A1 benannt, in der eine reguläre Ausführungsform einer Schutzabdeckung mit Faltenbalg und Stützrahmen offenbart wird.

Wenngleich es in vielen Fällen nicht erforderlich ist, dass eine Einsicht in den Bereich unter der Schutzabdeckung erforderlich ist, so werden Schutzabdeckungen jedoch auch in Anwendungsfällen eingesetzt, bei denen sich der Arbeitsbereich hinter der Schutzabdeckung befindet und eine Lichtquelle auf anderer Seite der Schutzabdeckung vorhanden ist. Dies betrifft insbesondere oberseitige Abdeckungen im Bereich von Werkzeugmaschinen oder dergleichen. Problematisch bei diesen Ausführungsformen ist es, dass die natürliche Beleuchtung bzw. die Hallenbeleuchtung durch die regulär eingesetzte Schutzabdeckung abgeschirmt wird, so dass eine zusätzliche Beleuchtung innerhalb des Maschinenraums erforderlich ist. Zur Umgehung ist es im dem Stand der Technik üblich, die Seitenwände hinreichend hoch auszuführen, so dass auf eine oberseitige Abdeckung verzichtet werden kann.

Weiterhin ist aus der DE 69 19 007 U eine Ausführungsform eines Faltenbalgs bekannt, welcher aus einer dünnen Polypropylenplatte hergestellt ist, wobei die Möglichkeit besteht, die Polypropylenplatte transluzent auszuführen. Diese Ausführungsform ermöglicht die Anbringung von beispielsweise Leuchtstoffröhren hinter der Schutzabdeckung, wobei unvermindert ein Großteil des Lichtes durch den Faltenbalg in den Arbeitsraum gelangen kann.

Sofern eine Leuchtstoffröhre direkt hinter der Schutzabdeckung angebracht wird ist es auch unerheblich, dass Tragelemente oder Führungselemente des Faltenbalges nicht durchscheinend sind, da die überwiegende Fläche einer Schutzabdeckung (bei Betrachtung senkrecht auf die Schutzabdeckung ausgehend von der Leuchtstoffröhre) frei von Tragelementen oder Führungselementen ausgeführt werden kann.

Nachteilig bei einer derartigen Ausführung ist es jedoch, dass bei schrägem Lichteinfall, bspw. durch eine natürliche Beleuchtung, eben jene Tragelemente und Führungselemente einen größeren Anteil des Lichtstroms zurückhalten und somit die Lichtverhältnisse im Arbeitsraum verschlechtern.

Aufgabe der vorliegenden Erfindung ist es, die Beleuchtungsverhältnisse bei Einsatz einer Schutzabdeckung nicht unnötig zu verschlechtern, so dass eine derartige Schutzabdeckung weiterhin auch in den Fällen einsetzbar ist, bei denen bisher aus Gründen der Lichtverhältnisse und Einsehbarkeit auf diesen verzichtet wurde.

Die gestellte Aufgabe wird durch eine erfindungsgemäße Ausführungsform nach der Lehre des Anspruchs 1 gelöst.

Vorteilhafte Ausführungsformen der Erfindung sind Gegenstand der Unteransprüche.

Die gattungsgemäße Schutzabdeckung dient zunächst einmal zur Abdeckung von Maschinenelementen oder dergleichen. Hierbei weist die Schutzabdeckung eine Mehrzahl von zueinander beweglichen Stützrahmen auf. Die konkrete Ausführungsform der Stützrahmen ist für die vorliegende Erfindung zunächst unerheblich. Zumindest befinden sich jeweils zwischen zwei Stützrahmen an den Stützrahmen befestigte Balgabschnitte. Die Balgabschnitte werden hierbei zumindest abschnittsweise von einem flexibel faltbaren Balgmaterial gebildet, so dass das übliche Zusammenfalten in Art eines Faltenbalgs mit Reduzierung der Baulänge der Schutzabdeckung möglich ist.

Erfindungsgemäß werden nunmehr die Beleuchtungsverhältnisse in Anwendung der Schutzabdeckung dadurch verbessert, dass die Balgabschnitte zumindest bereichsweise transparent und/oder transluzent ausgeführt sind. Somit wird es ermöglicht, dass Licht zumindest anteilig durch die Balgabschnitte dringen kann, so dass die Beleuchtungsverhältnisse auf der jeweils anderen Seite der Schutzabdeckung deutlich verbessert werden. Hierdurch erübrigt sich mitunter der Einsatz einer zusätzlichen Beleuchtung innerhalb eines Maschinenraums bzw. eröffnet die Möglichkeit des Einsatzes einer Schutzabdeckung in denjenigen Fällen, bei denen dieser Schutz bisher unterblieben ist.

Weiterhin ist es wesentlich für die vorliegende Erfindung, dass ebenso die Stützrahmen zumindest bereichsweise transparent und/oder transluzent ausgeführt werden. In Abhängigkeit von der Komprimierung der Balgabschnitte wird die Lichtdurchlässigkeit der Schutzabdeckung auch bei transparenten und/oder transluzenten Balgabschnitten im Wesentlichen von den Stützrahmen bestimmt. Wenn nun jedoch nicht transparente Stützrahmen eingesetzt werden, so wird auch bei transparenten Balgabschnitten der Großteil des einfallenden Lichts durch die Stützrahmen abgeschirmt. Insofern ist es für die vorliegende Erfindung vorgesehen, dass ebenso die Stützrahmen eine hinreichende Lichtdurchlässigkeit aufweisen. Dies ist insbesondere in den Fällen von Bedeutung, bei denen das Licht nicht parallel zu den Stützrahmen durch die Balgabschnitte fällt, sondern ein schräger Einfallwinkel für das Licht vorhanden ist, wie dies im Regelfall anzunehmen ist.

Nicht relevant ist es, wenn an den Stützrahmen weiterhin Elemente zur Führung am Maschinenelement oder sonstige Befestigungs- oder Verbindungselemente vorhanden sind, welche hier nicht transparent sind. Ebenso ist es hinsichtlich der Ausführung des Stützrahmens nicht relevant, wenn diejenigen Bereiche des Stützrahmens nicht transparent sind, welche sich unmittelbar an der Maschinenführung befinden und somit keinen nennenswerten Einfluss auf die Lichtverhältnisse haben.

In einer vorteilhaften Ausführung werden mehrere oder alle Balgabschnitte aus einem durchgehenden flexibel biegbaren Balgmaterial hergestellt und bilden einen Faltenbalg. Hierbei ist erfindungsgemäß ein zumindest abschnittsweise transparentes und/oder transluzentes Balgmaterial erforderlich.

In besonders vorteilhafter Ausführung werden die Balgabschnitte zwischen den Stützrahmen möglichst vollständig transparent und/oder transluzent ausgeführt. Somit sind keine unnötigen Einschränkungen hinsichtlich der Lichtdurchlässigkeit vorhanden. Unerheblich ist es insofern diesbezüglich, wenn möglicherweise Beschriftungen oder sonstige kleinflächige Markierungen auf den Balgabschnitten aufgedruckt oder in sonstiger Weise aufgebracht sind. Ebenso ist es diesbezüglich unerheblich, ob zur Befestigung der Balgabschnitte an den Stützrahmen nicht lichtdurchlässige Elemente eingesetzt werden.

Zur Realisierung der Balgabschnitte aus einem durchgehenden Balgmaterial ist es besonders vorteilhaft, wenn hierzu ein Plattenmaterial eingesetzt wird. Analog zum Plattenmaterial ist es ebenso möglich ein Endlosmaterial von einer Rolle einzusetzen, welches vor der Herstellung der Balgabschnitte abgewickelt wird und somit die Plattenform analog gebildet wird. Zur Realisierung der Balgabschnitte ist hierbei das Plattenmaterial an die entspannte Lage des Balgabschnitts anzupassen, wozu das Plattenmaterial durch Warmumformung umzuformen ist.

Eine weitgehend uneingeschränkte Biegbarkeit der Balgabschnitte bei einer Realisierung in Art eines durchgehenden Faltenbalgs wird vorteilhaft erzielt, wenn die Balgabschnitte von einer Kunststofffolie gebildet werden. Hierbei kann ein aufgerolltes Endlosmaterial eingesetzt werden, wobei nach Befestigung an den Stützrahmen eine uneingeschränkte Längenänderung des Faltenbalgs von der im Wesentlichen vollständigen Stauchung bis zur im Wesentlichen vollständigen Streckung ohne weitere Maßnahmen möglich ist.

In einer alternativen Ausführung werden die Balgabschnitte separat hergestellt, wobei dies in besonders vorteilhafter Weise mittels Extrusion erfolgt. Bei der Realisierung der einzelnen Balgabschnitte durch ein mittels Extrusion hergestelltes Element ist es weiterhin besonders vorteilhaft, wenn der Balgabschnitt aus zwei verschiedenen Materialien hergestellt wird, wobei der Balgabschnitt im Bereich einer Biegefalte aus einem ersten leicht verformbaren Material und der zwischen den Biegefalten liegende Abschnitt aus einem transparenten Material hergestellt wird. Diese aus zwei verschiedenen Materialien zugleich hergestellten Balgabschnitte ermöglichen somit sowohl eine vorteilhafte Biegbarkeit bei den Biegefalten, wie auch weiterhin eine optimale Lichtdurchlässigkeit realisiert wird.

Weiterhin ist es möglich, die Balgabschnitte aus wiederum mehreren Teilen zusammen zu setzen, wobei die Teile in vorteilhafter Weise miteinander verschweißt oder verklebt werden. Hierbei ist es in einfacher Weise möglich, sowohl die Erfordernisse hinsichtlich der Biegbarkeit als auch hinsichtlich der Lichtdurchlässigkeit zu erfüllen. Diesbezüglich kann beispielsweise vorgesehen sein, dass ein zwischen liegender Abschnitt des Balgabschnitts von einem transparenten Material gebildet wird und der weitere Abschnitt von einem leicht verformbaren Material. Ebenso ist es möglich ein Fenster in ein umgebendes Balgmaterial einzusetzen.

Durch die Wahl eines transparenten und/oder transluzenten Materials für die Stützrahmen kann in besonders vorteilhafter Weise sowohl die Lichtdurchlässigkeit verbessert werden als auch die Herstellungskosten minimiert werden können.

In den nachfolgenden Figuren werden zwei beispielhafte Ausführungsformen einer erfindungsgemäßen Schutzabdeckung exemplarisch skizziert.

Es zeigen:
- Fig. 1: eine Schutzabdeckung mit durch Extrusion hergestellten einzelnen Balgabschnitten;
- Fig. 2: eine Schutzabdeckung mit aus Endlosmaterial hergestellten Balgabschnitten in Art eines Faltenbalgs.

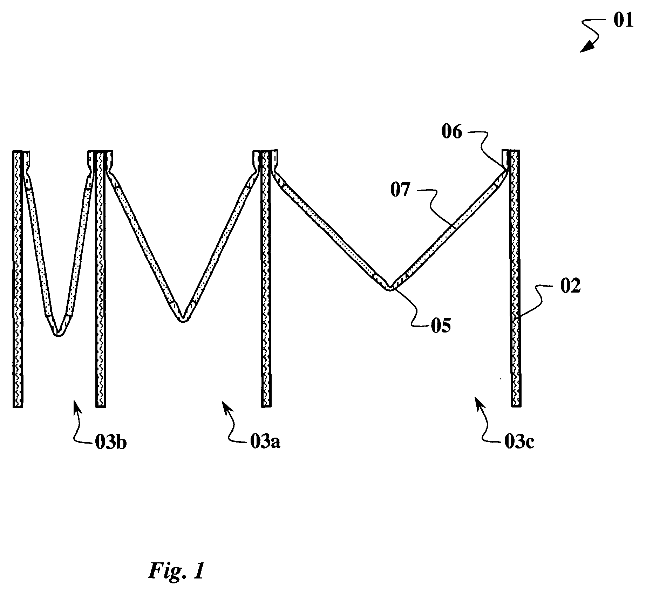

In der **Fig. 1** wird eine erste beispielhafte Ausführungsform einer Schutzabdeckung 01 exemplarisch skizziert, wobei zunächst einmal mehrere Stützrahmen 02 zu erkennen sind. Diese Stützrahmen 02 sind hierbei transparent bzw. transluzent. Zwischen den Stützrahmen 02 befinden sich jeweils Balgabschnitte 03 (in mittlerer Stellung 03a, in komprimiertem Zustand 03b, in gestrecktem Zustand 03c), welche ebenso transparent und/oder transluzent ausgeführt sind. Durch den Einsatz eines Extrusionsverfahrens zur Herstellung der Balgabschnitte 03 ist es möglich, eine Materialkombination einzusetzen, welche somit eine vorteilhafte Biegbarkeit der Balgabschnitte 03 als auch eine optimale Lichtdurchlässigkeit gewährleistet. Hierzu wird im Bereich der Biegefalten 05 und 06 ein besonders leicht biegbares Material eingesetzt, während hingegen im zwischenliegenden Bereich 07 ein transparentes Material eingesetzt wird.

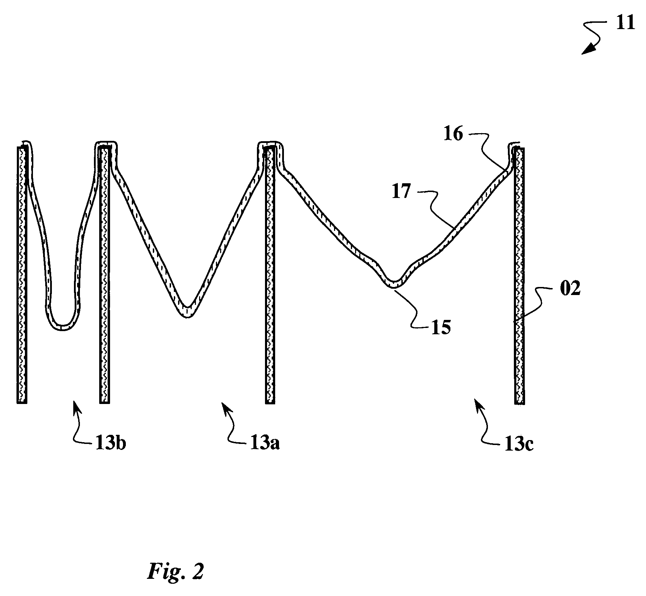

Alternativ zum ersten Ausführungsbeispiel skizziert die **Fig. 2** eine Ausführungsform, bei der anstelle von extrudierten Balgabschnitten 03 nunmehr für die Schutzabdeckung 11 die Balgabschnitte 13 gemeinsam von einem Endlosmaterial in Art eines Faltenbalgs hergestellt sind. Analog der Fig. 1 skizziert die Fig. 2 die drei exemplarischen Zustände mit der mittleren Länge des Balgabschnitts 13a, einem komprimieren Balgabschnitt 13b sowie einem gestreckten Balgabschnitt 13c.

## Patentansprüche

1. Schutzabdeckung (01, 11), insbesondere zur Abdeckung von Maschinenelementen oder dergleichen, mit einer Mehrzahl von zueinander beweglichen Stützrahmen (02) und mit jeweils zwischen zwei Stützrahmen (02) angeordneten und an diesen befestigten Balgabschnitten (03, 13), die insgesamt einen Faltenbalg oder eine faltenbalgähnliche Abdeckung bilden,
**dadurch gekennzeichnet,**
**dass** die Balgabschnitte (03, 13) und die Stützrahmen (02) zumindest bereichsweise transparent und/oder transluzent ausgebildet sind.

2. Schutzabdeckung (11) nach Anspruch 1,
**dadurch gekennzeichnet,**
**dass** die Balgabschnitte (13) einen einstückigen Faltenbalg bilden.

3. Schutzabdeckung (01) nach Anspruch 1,
**dadurch gekennzeichnet,**
**dass** die Balgabschnitte (03) als separate Elemente ausgebildet sind.

4. Schutzabdeckung (01, 11) nach einem der Ansprüche 1 bis 3,
**dadurch gekennzeichnet,**
**dass** die Balgabschnitte (03, 13) aus einem transparenten und/oder transluzenten Material bestehen.

5. Schutzabdeckung nach einem der Ansprüche 1 bis 3,
**dadurch gekennzeichnet,**
**dass** die Balgabschnitte mindestens ein Fenster aus einem transparenten und/oder transluzenten Material aufweisen.

6. Schutzabdeckung (01, 11) nach einem der Ansprüche 1 bis 5,
**dadurch gekennzeichnet,**
**dass** die Stützrahmen (02) aus einem transparenten und/oder transluzenten Material bestehen.

## Claims

1. A protective cover (01, 11), in particular for covering machine elements or the like, comprising a plurality of support frames (02), which are mobile relative to one another, and comprising bellows sections (03, 13) each arranged between two support frames (02) and attached to said support frames (02) and forming in their totality a bellows or a bellows-like cover,
**characterised in that**
the bellows sections (03, 13) and the support frames (02) are transparent and/or translucent at least in areas.

2. The protective cover (11) according to claim 1,
**characterised in that**
the bellows sections (13) form a one-piece bellows.

3. The protective cover (01) according to claim 1,
**characterised in that**
the bellows sections (03) are realized as separate elements.

4. The protective cover (01, 11) according to any one of claims 1 to 3,
**characterised in that**
the bellows sections (03, 13) are made of a transparent and/or translucent material.

5. The protective cover according to any one of claims 1 to 3,
**characterised in that**
the bellows sections have at least one window made of a transparent and/or translucent material.

6. The protective cover (01, 11) according to any one of claims 1 to 5,
**characterised in that**
the support frames (02) are made of a transparent and/or translucent material.

## Revendications

1. Couvercle de protection (01, 11), destiné en particulier à couvrir des éléments de machine ou d'autres choses semblables, comprenant une pluralité de cadres de support (02) mobiles les uns par rapport aux autres et comprenant des sections de soufflet (03, 13) chacune étant disposée entre deux cadres de support (02) et y attachée et formant dans leur ensemble un soufflet ou un couvercle semblable à un soufflet,
**caractérisé en ce que**
les sections de soufflet (03, 13) et les cadres de support (02) sont transparents et/ou translucides au moins par zones.

2. Couvercle de protection (11) selon la revendication 1,
**caractérisé en ce que**
les sections de soufflet (13) forment un soufflet d'une seule pièce.

3. Couvercle de protection (01) selon la revendication 1,
**caractérisé en ce que**
les sections de soufflet (03) sont réalisées comme éléments séparés.

4. Couvercle de protection (01, 11) selon l'une quelconque des revendications 1 à 3,
**caractérisé en ce que**
les sections de soufflet (03, 13) sont composées d'un matériau transparent et/ou translucide.

5. Couvercle de protection selon l'une quelconque des revendications 1 à 3,
**caractérisé en ce que**
les sections de soufflet ont au moins une fenêtre en un matériau transparent et/ou translucide.

6. Couvercle de protection (01, 11) selon l'une quelconque des revendications 1 à 5,
**caractérisé en ce que**
les cadres de support (02) sont composés d'un matériau transparent et/ou translucide.
